# EUROPEAN PATENT APPLICATION

(11) **EP 4 450 400 A1**
(43) Date of publication of application: **23.10.2024**
(21) Application number: 23382352.5
(22) Date of filing: 17.04.2023
(51) Int. Cl.: B64D 37/04, B64D 37/30, F17C 3/00

(54) **AN AIRCRAFT SECTION**

(71) Applicant: Airbus Operations, S.L.U., 28906 Getafe (Madrid) (ES)
(72) Inventor: FERNÁNDEZ RAMÍREZ, Ana, E-28906 Getafe - Madrid (ES); BALLESTERO MÉNDEZ, Jorge, E-28906 Getafe - Madrid (ES); PIÑEYROA DE LA FUENTE, Eugenio, E-28906 Getafe - Madrid (ES)
(74) Representative: ABG Intellectual Property Law, S.L.

(57) **Abstract**

The invention provides an aircraft section comprising a fuel storage tank, a first strap, a second strap, at least one anchoring structure and at least one coupling portion; wherein: the first strap comprises two attachment portions anchored to the at least one anchoring structure; the second strap comprises two attachment portions anchored to the at least one anchoring structure; and the first strap and the second strap are arranged under tension such that the tank is maintained pressed against the at least one coupling portion by the first strap and the second strap.

## Description

### TECHNICAL FIELD OF THE INVENTION

The present invention belongs to the technical field of fuel storage systems in aircraft. Particularly, the present invention provides an aircraft section comprising a fuel storage tank and straps for its attachment.

### BACKGROUND OF THE INVENTION

Due to environmental reasons, challenges to reduce the use of fossil fuels must be increasingly faced. In this scenario, hydrogen produced on the basis of renewable energy is a reasonable candidate for efficient energy supply. Its high energy density makes it an emerging alternative fuel for aircraft applications.

In particular, hydrogen is an attractive fuel for high-altitude short-medium range aircraft because it contains about 6.2 times the energy per kilogram as compared with traditional hydrocarbon fuels. Therefore, in aircraft applications, said high specific energy of hydrogen may be a key enabler. However, practical considerations have largely prevented its use. While the specific energy of hydrogen is very high, the energy per volume unit is comparatively low. Liquid hydrogen (LH2) enhances its energy density relative to gaseous form while allowing to reduce the mass of the tank required to confine the hydrogen within as a result of the lower pressure in liquid state. Liquid hydrogen at 20 K and 1 bar pressure has a density of 70 g/l compared to the 40 g/l of gaseous hydrogen at 88 K and 700 bar. Only cryo-compressed hydrogen has a higher density, with a value of 80 g/l at 38 K and 300 bar. According to these parameters, liquefied cryogenic form allows efficient storage at low pressure.

In this regard, LH2 cryotanks (i.e., tanks configured for housing liquid hydrogen and for maintaining the necessary conditions for maintaining hydrogen in the liquid state) are one of the key components of the structure of future generations of heavy lift launch vehicles, space exploration structures and new green aircraft. It is in aircraft where the greatest challenges lie in developing hydrogen storage systems as a result of the need for reduced weight in combination with good insulating and permeation properties.

An additional challenge in aircraft industry is the attachment of cryotanks. The most common way to attach cryotanks is the use of rigid supports such as brackets attached at discrete attachment points to the tank and to the aircraft structure. However, this type of attachment can lead to a highly concentrated in-plane and out-of-plane loads on the portions of the cryotank skin to which said rigid supports are attached.

### SUMMARY OF THE INVENTION

The present invention provides an aircraft section according to claim 1 and an aircraft according to claim 15. Advantageous embodiments are defined in the dependent claims.

In a first inventive aspect, the invention provides an aircraft section comprising a fuel storage tank, a first strap, a second strap, at least one anchoring structure and at least one coupling portion; wherein:
the first strap comprises two attachment portions anchored to the at least one anchoring structure;
the second strap comprises two attachment portions anchored to the at least one anchoring structure; and
the first strap and the second strap are arranged under tension such that the tank is maintained against the at least one coupling portion by the first strap and the second strap.

Throughout the document, in relation to the term "fuel storage tank", the terms "tank" or "first tank" will also be used to refer to such "fuel storage tank". Likewise, for embodiments where there are two tanks installed in an aircraft section, the terms "first tank" and "second tank" will be used equivalently to "first fuel storage tank" and "second fuel storage tank", respectively.

A strap shall be understood as a strip or band of material used for securing, holding together or clamping an object in position. Preferred materials, alone or in combination, for manufacturing the described straps are textile materials with fibers of materials such as nylon, polyamide, Ultra-high-molecular-weight polyethylene ("UHMWPE"), or metallic materials.

An anchoring structure shall be understood as a structure suitable for anchoring the straps that hold the tank. In an embodiment, the aircraft section comprises a single anchoring structure. In another embodiment, the aircraft section comprises a plurality of anchoring structures. In an embodiment, at least one anchoring structure is part of an airframe of the aircraft.

A coupling portion shall be understood as a portion of an element of the aircraft section (denoted herein "coupling element") suitable for maintaining the tank pressed against it. A coupling element may comprise a single coupling portion or a plurality of coupling portions. In an embodiment, the aircraft section comprises a single coupling portion. In another embodiment, the aircraft section comprises a plurality of coupling portions pertaining to a single coupling element or to a plurality of coupling elements. In some embodiments, an anchoring structure is also a coupling element, in the sense that a coupling portion against which the tank is pressed is a portion of an anchoring structure to which one or more straps are anchored. In other embodiments, the aircraft section comprises one or more coupling elements comprising one or more coupling portions against which the tank is pressed, wherein these coupling elements are not used for anchoring the straps that hold the tank. In an embodiment, a coupling portion is a portion of a frame.

A tank is coupled to at least one coupling portion of the aircraft section by means of a first strap and a second strap which are arranged under tension to maintain the tank pressed against said at least one coupling portion. In an embodiment, the first and second strap maintain the tank against the same coupling portion. In another embodiment, the first and second strap maintain the tank against multiple coupling portions. In this regard, it shall be understood that, according to embodiments of the invention, the tank may be provided with different geometries adapted to the geometric constraints of a particular aircraft section. According to these embodiments, the coupling portions may be provided as discrete surfaces of coupling elements separated between them. According to these embodiments, a single tank may be maintained against multiple coupling portions.

Regarding the attachment of the first strap and the second strap, each strap comprises two attachment portions anchored to one or more parts of one or more anchoring structures of the aircraft section, such that the combined action of the first strap and the second strap supports the inertial loads of the tank, maintaining the tank pressed against the at least one coupling portion, and allows balancing the moments generated by the weight and other forces - such as inertial loads due to accelerations of the tank's content - acting on the tank during flight operation.

In order for the first and second straps to be subjected to a tension that results in a force being applied to the tank to maintain it pressed against at least one coupling portion, a preload is applied to the first and second straps during the assembly (i.e., coupling) phase of the tank to the coupling portion.

Advantageously, the coupling of the tank to the at least one coupling portion, with the tank pressed (i.e., maintained) against said coupling portion along a portion of the outer skin of the tank, by means of the first strap and the second strap, provides a continuous contact surface along which the inertial loads of the tank are transmitted and distributed, thus minimising stress concentration.

Likewise, the corresponding contact portions of the first strap and the second strap with the tank allow the distribution of the inertial loads of the tank along their length, unlike rigid supports with which high loads would appear due to said inertial loads, and, more in particular, out-of-plane loads which tend to generate tensile stress, which may jeopardize the integrity of CFRP tanks given that the out-of-plane tensile strength of composite CFRP laminates is low. This out-of-plane load concentration may lead to failure.

In an embodiment, the attachment portions are anchored using at least one anchoring means. In an embodiment, each attachment portion is anchored using an anchoring means.

In an embodiment, the first strap and/or the second strap is arranged with each of the two attachment portions being anchored to different parts of an anchoring structure or to parts of different anchoring structures.

In an embodiment, the first strap and/or the second strap is arranged such as to form substantially a U-shape.

In an embodiment, the first strap and/or the second strap is arranged such as to form substantially an L-shape.

In an embodiment, the first strap and/or the second strap is arranged such as to form a closed loop, with both attachment portions being anchored to the same part of an anchoring structure.

In an embodiment, a portion of the tank has a geometry that matches the geometry of the coupling portion of the aircraft section to which it is coupled.

In an embodiment, the extension of at least one coupling portion is optimised according to an expected dynamic behaviour of the tank and aircraft section, taking into account the deformation of the aircraft section at the coupling portion in case of impact.

In an embodiment the tank is made of composite or metal.

In an embodiment the tank is a cryotank.

According to various embodiments, the aircraft section is the fuselage section of the aircraft, an unpressurized section of the fuselage or the tail-cone of the aircraft.

In an embodiment, the tank is arranged resting on a portion of the first strap and on a portion of the second strap.

In an embodiment, a damping layer is provided between the at least one coupling portion and the tank.

The implementation of a damping layer between the coupling portion and the tank allows to dampen vibrations and absorb deformations and relative displacements between the coupling portion and the tank, such as those derived from the in-flight operation of the aircraft. Likewise, this damping layer prevents shocks or direct contact during the assembly and coupling process of the tank and the coupling portion of the aircraft section, also contributing to absorb possible deformations resulting from the preloading process of the straps around the tank to couple it to the coupling portion. Thus, advantageously, the structural integrity of the coupling portion and of the tank itself is protected by the damping layer.

In an embodiment, the damping layer is made of an elastomeric material.

In an embodiment, the damping layer is made of at least one material selected from high performance elastomers, such as polyurethanes, NBR (acrylonitrile butadiene) or rubber.

In an embodiment, the aircraft section comprises a first retention strap, wherein the first retention strap comprises a retention portion in contact with the tank, said retention portion being wider than a portion of the first retention strap which is not in contact with the tank.

In a particular embodiment, the tank extends along a longitudinal direction, the tank having a first longitudinal end and a second longitudinal end according to the longitudinal direction, wherein the first strap and the second strap are arranged transversely (i.e. perpendicularly) with respect to the longitudinal direction of the tank, wherein the retention portion of the first retention strap is in contact with the first longitudinal end of the tank, and the first retention strap comprises at least two attachment portions anchored to the at least one anchoring structure.

The pressure force exerted by the first strap and the second strap onto the tank skin, pressing it against at least one coupling portion, has a resultant reaction substantially perpendicular to the contact surface, i.e., to the coupling portion itself.

The first strap and the second strap withstand inertial loads of the tank in directions transverse to the longitudinal direction of the tank. The first retention strap, with its retention portion in contact with the first longitudinal end of the tank, supports inertial loads of the tank along the longitudinal direction of the tank. Thus, with the combined action of the first and second straps and the first retention strap, retention of the tank and resistance of the inertial loads of the tank in all directions of the space are provided.

In an embodiment, the first retention strap is arranged under tension.

In an embodiment, both the first strap and the second strap have a very high aspect ratio (for example, the length of the straps being about two orders of magnitude greater than their width), and are arranged defining corresponding substantially parallel planes, each of said parallel planes being transverse to the longitudinal direction of the tank.

In an embodiment, the tank extends along a longitudinal direction.

In an embodiment according to which the tank extends along a longitudinal direction, the first strap and/or the second strap is anchored at anchoring points such that, when the anchoring points are projected on a plane perpendicular to the longitudinal direction along which the tank extends, a segment is defined between the longitudinal direction and the projection of each anchoring point. In an embodiment, the angle defined between the two segments on said perpendicular plane in the direction in which the first strap and/or the second strap extends is in the range from 180° and 270°.

In a particular embodiment, the tank has a revolution geometry.

In a particular embodiment, the tank comprises a central portion with a substantially cylindrical geometry.

In a particular embodiment, the tank comprises a central portion with a substantially elliptical geometry.

In a particular embodiment, the tank comprises a central portion with a substantially frustoconical geometry.

In an embodiment, the tank comprises at least one portion with a dome-shaped geometry provided in the first longitudinal end and/or the second longitudinal end.

In an embodiment, the dome-shaped geometry is a spherical cap geometry.

In an embodiment, the tank comprises at least one portion with a toroidal geometry provided in the first longitudinal end and/or the second longitudinal end.

In an embodiment, the tank comprises a dome-shaped geometry in the first longitudinal end and/or the second longitudinal end, and the retention strap is arranged with its retention portion arranged at the vertex of the dome-shaped geometry. According to this arrangement, the retention strap provides optimised tank retention by withstanding the inertial loads along the longitudinal direction of the tank. In an embodiment, the tank comprises a central portion with a substantially cylindrical, frustoconical or elliptical geometry.

In an embodiment, in order to provide the first retention strap with tension to withstand inertial loads in the longitudinal direction of the tank, for a first retention strap having its retention portion in contact with one longitudinal end of the tank, the first retention strap is anchored to at least one anchoring structure located at a position corresponding to a point between said longitudinal end of the tank and the opposite longitudinal end of the tank, or at a position extending beyond the position of the opposite longitudinal end of the tank.

In an embodiment wherein the aircraft section is a section of the fuselage of an aircraft, wherein the tank is oriented with its longitudinal direction parallel to the longitudinal direction of the fuselage, and the first retention strap is arranged with its retention portion in contact with the forward longitudinal end of the tank, the first retention strap withstands inertial loads along the longitudinal direction of the tank tending to accelerate the tank forward in the tail cone-to-cockpit direction. According to this embodiment, the first retention strap will preferably be anchored to portions of an airframe of the section of the fuselage set back with respect to the location of the forward longitudinal end of the tank.

In an embodiment wherein the aircraft section is a section of the fuselage of an aircraft, wherein the tank is oriented with its longitudinal direction parallel to the longitudinal direction of the fuselage, and the first retention strap is arranged with its retention portion in contact with the rear longitudinal end of the tank, the first retention strap supports inertial loads along the longitudinal direction of the tank tending to accelerate the tank backward in the cockpit-to-tail cone direction. According to this embodiment, the first retention strap will preferably be anchored to portions of an airframe of the section of the fuselage forward with respect to the location of the rear longitudinal end of the tank.

In one embodiment, the retention portion of the first retention strap comprises at least one opening configured to allow passage of protruding elements or piping connected to the tank through that longitudinal end, for example for the transmission of fluid to or from the interior of the tank.

In an embodiment, the aircraft section comprises, in addition to a first retention strap, a second retention strap, wherein the second retention strap comprises a retention portion in contact with the tank, said retention portion being wider than a portion of the second retention strap which is not in contact with the tank, wherein the retention portion of the second retention strap is in contact with the second longitudinal end of the tank, and wherein the second retention strap comprises at least two attachment portions anchored to the at least one anchoring structure.

Advantageously, this embodiment provides the tank with a coupling configured to offer resistance to acceleration forces in any direction.

In an embodiment, the second retention strap is arranged under tension.

In an embodiment:
the tank comprises dome-shaped portions provided at the first longitudinal end and the second longitudinal end according to the longitudinal direction of the tank,
the aircraft section is a section of the fuselage,
the tank is oriented with its longitudinal direction parallel to the longitudinal direction of the fuselage,
the first longitudinal end is the forward longitudinal end of the tank and the second longitudinal end is the rear longitudinal end of the tank,
the first retention strap is arranged with its retention portion arranged in contact with the forward longitudinal end of the tank, and
the second retention strap is arranged with its retention portion arranged in contact with the rear longitudinal end of the tank.

In this embodiment, the first retention strap is preferably anchored to at least two portions of an airframe of the fuselage set back with respect to the location of the forward longitudinal end of the tank, and the second retention strap is preferably anchored to at least two portions of an airframe of the fuselage forward with respect to the location of the rear longitudinal end of the tank.

In this embodiment, the first retention strap and the second retention strap withstand inertial loads along the longitudinal direction of the tank tending to accelerate the tank forward in the tail cone-to-cockpit direction or backward in the cockpit-to-tail cone direction.

In an embodiment, the tank comprises a central portion with a substantially cylindrical, elliptical or frustoconical geometry

In a particular embodiment, the aircraft section comprises at least one additional strap comprising two attachment portions anchored to the at least one anchoring structure, said at least one additional strap being arranged under tension such that the tank is maintained pressed against the at least one coupling portion by the first strap, the second strap and/or the additional strap.

In order for the additional strap to be subjected to a tension that results in a force being applied to the tank to maintain it pressed against the coupling portion, a preload is applied to the additional strap during the assembly (i.e., coupling) phase of the tank to the coupling portion.

Advantageously, the additional strap provides the aircraft section with an improved fail-safe design. In particular, the additional strap is designed to withstand the limit load in the event of failure of one of the first strap or the second strap, such that the additional strap allows to continue normal operation.

In an embodiment, a portion of an additional strap overlaps with a portion the first strap or with a portion of the second strap.

In an embodiment, a portion of an additional strap is joined with a portion the first strap or with a portion of the second strap.

In an embodiment, the joined portions of an additional strap and the first strap or the second strap are uncoupled close to the corresponding attachment portions, branching and separating from each other to attach to the corresponding part of the at least one anchoring structure by means of respective anchoring means.

In a particular embodiment, at least one attachment portion of the first strap, at least one attachment portion of the second strap and/or at least one attachment portion of an additional strap is bifurcated into two attachment subportions, each attachment subportion being connected to a different part of the at least one anchoring structure.

In an embodiment, the first strap, the second strap and/or an additional strap comprises two braided strands, wherein each braided strand is connected to a different part of at least one anchoring structure.

In a particular embodiment, the aircraft section comprises a second fuel storage tank, a third strap and a fourth strap; wherein:
the third strap comprises two attachment portions anchored to the at least one anchoring structure;
the fourth strap comprises two attachment portions anchored to the at least one anchoring structure;
the third strap and the fourth strap are arranged under tension such that the second tank is maintained pressed against the at least one coupling portion by the third strap and the fourth strap.

In an embodiment, the tanks are arranged in a tandem configuration; that is, the second tank is arranged consecutively behind the first tank along a longitudinal direction of the aircraft section such that the corresponding longitudinal axes of each of the first tank and the second tank are substantially aligned with each other and substantially parallel to the longitudinal direction of the aircraft section.

In an embodiment, the tanks are arranged in a side by side configuration, that is, the first tank and the second tank are arranged in a same aircraft section with their respective longitudinal axes being substantially parallel to each other.

In an embodiment, the tanks are arranged in a stacked configuration, that is, one above the other according to a vertical direction of the aircraft section.

In an embodiment, the aircraft section comprises a second fuel storage tank, a third strap and a fourth strap; wherein:
the third strap comprises two attachment portions anchored to the at least one anchoring structure;
the fourth strap comprises two attachment portions anchored to the at least one anchoring structure;
the third strap and the fourth strap are arranged under tension such that the second tank is maintained pressed against at least one coupling portion by the third strap and the fourth strap;
at least one anchoring structure is a coupling element;
at least one coupling portion is a portion of the coupling element;
at least one attachment portion of the first strap and at least one attachment portion of the second strap are anchored to the coupling element; and
at least one attachment portion of the third strap and at least one attachment portion of the fourth strap are anchored to the coupling element.

Having more than a single tank in the same aircraft section may provide various benefits such as providing redundancy, for example. The second tank is coupled to at least one coupling portion by means of a third strap and a fourth strap, in the same way as the first tank is coupled by means of the first strap and the second strap. In this embodiment, at least one anchoring structure is a coupling element and at least one coupling portion is a portion of said coupling element.

In an embodiment, the tanks are arranged in a side by side configuration and the coupling element is a frame having a yoke shape. More specifically, the coupling element is provided on its contour with two separate arc-shaped portions profiled with a circumferential arc geometry configured to receive the tanks. Each tank is maintained pressed against an arc-shaped portion of the coupling element along at least one portion of the tank outer skin, thus ensuring the stability of the coupling of both tanks during the entire operation of the aircraft. In this embodiment, the arc-shaped portions define coupling portions against which the tanks are maintained pressed. In an embodiment, the tanks comprise a central portion with a substantially cylindrical, elliptical or frustoconical geometry.

In an embodiment, the tanks are arranged in a side by side configuration and the coupling element comprises a wall interposed between both tanks, such that the first tank and the second tank are maintained pressed against opposite sides of the wall. In this embodiment, the wall defines coupling portions against which the tanks are maintained pressed by the straps. In an embodiment, the tanks comprise a central portion with a substantially cylindrical, elliptical or frustoconical geometry.

Advantageously, having each tank maintained pressed against said wall, preferably through the interposition of a damping layer in between, provides additional surface area to dampen possible vibrations and absorb possible deformations derived from the aircraft flight operation.

In a particular embodiment, the aircraft section is a fuselage section and at least one coupling portion is a portion of at least one frame of the fuselage section. In an embodiment, the coupling portion is an upper portion of the frame.

In a particular embodiment, a clearance is provided between the tank and a lower portion of the frame, such as a lower portion opposite to the coupling portion.

Advantageously, in an embodiment wherein the aircraft section is a section of the fuselage of an aircraft and wherein the tank is coupled to an upper portion of a frame of said fuselage, the distance defined between the lower part of the tank and the lower portion of the frame contributes to prevent potential effects of an impact in case of a vertical impact event as well as to integrate different energy absorption solutions.

Additionally, by preventing the use of discrete rigid supports to attach the tank and employing the strap system of the aircraft section of the invention, it is possible to additionally approximate the tank to the coupling portion. In this way, it is possible to increase the clearance compared to a solution using rigid supports for a tank with the same size, or to increase the diameter of a tank with a substantially cylindrical configuration while maintaining the same clearance.

For a same tank volume, this diameter increase would reduce the tank length in a higher proportion, and by doing so, would optimize its gravimetric index.

In an embodiment, at least one attachment portion of the first strap and/or at least one attachment portion of the second strap is anchored at a portion of minimum theoretical displacement of the frame when the aircraft section is submitted to vertical impact. Regarding the vertical direction, it shall be understood that it corresponds to the yaw axis (i.e., vertical direction) of the aircraft.

In an embodiment, the portions of minimum theoretical displacement of a circular frame of an aircraft are located, for any cross-section of the aircraft section by a plane perpendicular to the longitudinal direction of the aircraft, at angular positions of about 40-50 degrees, 130-140 degrees, 220-230 degrees and 310-320 degrees with respect to the projection of the direction of the positive (upward) yaw axis of the aircraft on that plane.

Advantageously, in an embodiment in which the aircraft section is a substantially cylindrical section of the fuselage, arranging corresponding anchoring means of the first strap and the second strap at positions of minimum theoretical displacement of said fuselage section allows reducing the transverse loads transmitted to the tank by the coupling portion and the straps in case of a vertical impact event.

In a second inventive aspect, the invention provides an aircraft comprising an aircraft section according to any embodiment of the first inventive aspect.

In an embodiment, the aircraft comprises an airframe, wherein at least one attachment portion of the first strap and/or at least one attachment portion of the second strap is anchored at a portion of minimum theoretical displacement of the airframe when the aircraft is submitted to vertical impact. In particular, at least one attachment portion of the first strap and/or at least one attachment portion of the second strap is anchored at a portion of minimum theoretical displacement-when the aircraft is submitted to vertical impact - of a circular frame of the airframe.

Regarding the vertical direction, it shall be understood that it corresponds to the yaw axis (i.e. vertical direction) of the aircraft.

In a particular embodiment, the aircraft section is an unpressurized rear section of the aircraft.

In a particular embodiment, the aircraft section is an unpressurized rear section of the fuselage.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from preferred embodiments of the invention, given just as examples and not being limited thereto, with reference to the drawings.
- Figures 1a-1b: These figures show a schematic representation of a cross-sectional view of an aircraft section according to an embodiment of the invention and a stage in the process of attaching the tank to a coupling portion of the aircraft section.
- Figures 2a-2b: These figures show schematic representations of cross-sectional views of aircraft sections according to embodiments of the invention.
- Figure 3: This figure shows a schematic representation of an additional strap anchored to a part of an anchoring structure of an aircraft section through an anchoring means and joined with a first strap of said aircraft section according to an embodiment of the invention.
- Figure 4: This figure shows a schematic representation of a strap distribution configuration around a tank in an aircraft section according to an embodiment of the invention.
- Figures 5a-5c: These figures show schematic representations of strap distribution configurations around a tank in an aircraft section according to an embodiment of the invention.
- Figures 6-8: These figures show schematic representations of an aircraft section according to an embodiment of the invention.
- Figures 9-10: These figures show schematic representations of an aircraft section according to an embodiment of the invention.
- Figure 11: This figure shows a schematic representation of an aircraft comprising a section of fuselage according to an embodiment of the invention.

### DETAILED DESCRIPTION OF THE INVENTION

Once the object of the invention has been outlined, specific non-limitative embodiments are described hereinafter.

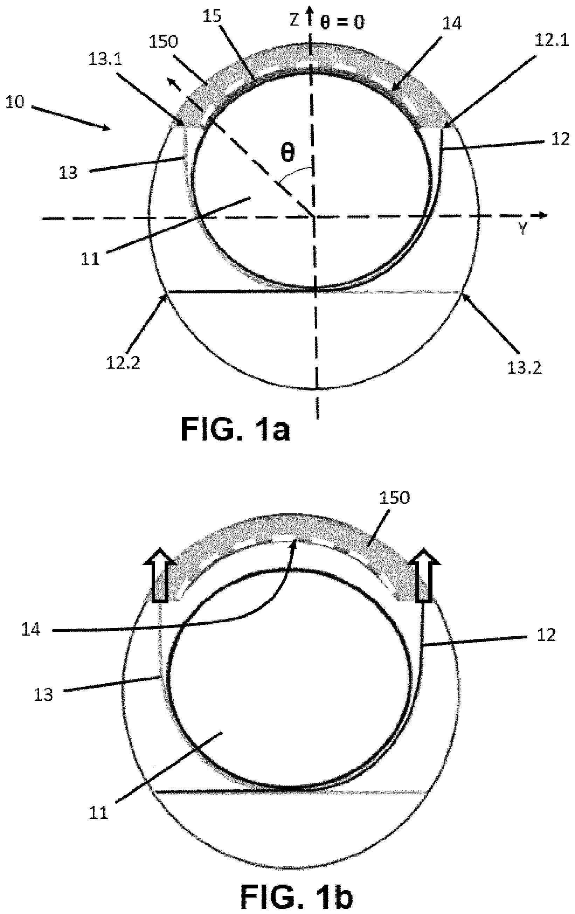

Figure 1a shows a schematic representation of a cross-sectional view of an aircraft section (10) according to an embodiment of the invention. More particularly, the aircraft section (10) shown is an unpressurized fuselage section of an aircraft (20), comprising a fuel storage tank (11) which has a central portion with a substantially cylindrical geometry. Although the embodiment of the tank (11) shown has a central portion with a substantially cylindrical geometry, other embodiments may comprise a central portion with a different shape, such as a substantially elliptical or frustoconical geometry.

The aircraft section (10) comprises an anchoring structure (150), which in the embodiment shown in figure 1a is a frame (150) of the fuselage section, the frame (150) being part of an airframe of the aircraft.

As it can be seen, the tank (11) is coupled to a coupling portion (14) of the fuselage section (10) of the aircraft (20). The coupling portion (14) is schematically identified as a white discontinuous line in the figure. Said coupling portion (14) is, in this embodiment, an upper portion of the frame (150) according to a vertical direction of the fuselage section (10) of the aircraft (20). In this regard, for illustrative purposes, only the upper portion of the frame (150) of the fuselage section (10), coloured in grey, is shown. In this sense, it will be understood that the frame (150) may extend to form an annular structure. Thus, in this embodiment the frame (150) acts both as an anchoring structure and as a coupling element.

Regarding the vertical direction, it shall be understood that it corresponds to the yaw axis of the aircraft (20) (i.e., vertical direction shown as Z-axis in Figure 1a).

Additionally, in the embodiment shown in Figure 1a, a damping layer (15) is provided between the coupling portion (14) and the tank (11), the damping layer (15) being preferably made of an elastomeric material. Said damping layer (15) is schematically shown in Figure 1a and is configured to dampen vibrations and absorb partially deformations and relative displacements between the coupling portion (14) and the tank (11), such as those derived from the in-flight operation of the aircraft (20) and the assembly process of the tank (11) as shown in Figure 1b. In this way, the structural integrity of the coupling portion (14) and of the tank (11) itself is protected.

To keep the tank (11) in position, secured and pressed against said coupling portion (14), the fuselage section (10) shown further comprises a first strap (12) and a second strap (13) which are arranged under tension, that is, which have been preloaded in order to withstand the inertial loads of the tank (11). As shown, said first strap (12) and second strap (13) cross underneath the tank (11) to support the inertial loads of the tank (11) and allow said tank (11) to be maintained pressed against the coupling portion (14). Additionally, as can be seen, both the first strap (12) and the second strap (13) are arranged forming substantially an L-shape, respectively. In the YZ plane shown in Figure 1a, where the Z-axis and Y-axis respectively correspond to the yaw and pitch axes of the aircraft, the first strap (12) is anchored at approximately 120° and 305° and the second strap (13) is anchored at approximately 55° and 240°, wherein the angles are defined from the positive Z-axis in anticlockwise direction. In other embodiments, the straps may be anchored at other angular positions.

In relation to the assembly process, Figure 1b shows a schematic representation of a stage in the process of attaching the tank (11) to the coupling portion (14) of the aircraft section (10). As can be seen, two unfilled arrows show the direction of pull of the first (12) and second (13) straps with respect to the coupling portion (14) to bring the tank (11) against the coupling portion (14).

Additionally, in order for the first (12) and second (13) straps to be subjected to a tension that results in a force being applied to the tank (11) to maintain the tank (11) pressed against the coupling portion (14), a preload is applied to the first (12) and second (13) straps after the tank (11) has been brought against the coupling portion (14) or, as shown in the embodiment of Figure 1a, against the damping layer (15).

In particular, the first strap (12) comprises two attachment portions (12.1, 12.2) anchored to at least one part of one or more anchoring structures (150) of the unpressurized fuselage section (10) through two corresponding anchoring means (not shown). In this embodiment, one of the attachment portions (12.1) of the first strap (12) is anchored to the frame (150) which defines the coupling portion (14), whereas the other attachment portion (12.2) of the first strap (12) is anchored to a different part of the unpressurized fuselage section (10). Said different part may be a different portion of the same frame (150) or a portion of a different anchoring structure of the unpressurized fuselage section (10), for example another portion of the airframe.

In turn, the second strap (13) comprises two attachment portions (13.1, 13.2) anchored to different parts of one or more anchoring structures of the unpressurized fuselage section (10) through two corresponding anchoring means (not shown). In this embodiment, one of the attachment portions (13.1) of the second strap (13) is anchored to the frame (150) which defines the coupling portion (14), whereas the other attachment portion (13.2) of the second strap (13) is anchored to a different part of the unpressurized fuselage section (10). Said different part may be a different portion of the same frame (150) or a portion of a different anchoring structure of the unpressurized fuselage section (10), for example another portion of the airframe.

The coupling of the tank (11) to the coupling portion (14), with the tank pressed against said coupling portion (14) along an arc of the outer skin of the tank (11), by means of the first strap (12) and the second strap (13), provides a surface along which the inertial loads of the tank are transmitted and distributed.

Likewise, the corresponding contact portions of the first strap (12) and the second strap (13) with the tank (11) allow the distribution of the inertial loads of the tank (11) along the length of the contact portions, unlike in the case of discrete rigid supports where high loads would appear due to said inertial loads, and, more in particular, out-of-plane loads which tend to generate tensile stress.

In particular, such discrete points suffer from the problem of concentrating high loads in points with high stiffness and relatively small size compared to the tank (11) which may result in a problem for CFRP tanks.

Finally, as it can be seen, in this embodiment there is clearance provided between the tank (11) and a lower portion of the fuselage section opposite to the coupling portion (14), said clearance providing a distance to integrate different energy absorption solutions and to prevent potential effects of an impact in case of a vertical impact event.

Although in Figures 1a and 1b only one frame (150) and one coupling portion (14) are shown, the aircraft section (10) may include a plurality of frames (150), each one defining a coupling portion (14) against which the tank (11) is maintained pressed, and the first and second straps may be anchored to different frames (150). Also, the aircraft section (10) may include additional straps.

Additionally, in an embodiment, the first strap (12) is in a forward position with respect to the second strap (13), which is closer to an opposite longitudinal end of the tank (11). In this way, the displaced position of both the first strap (12) and second strap (13), each closer to a different longitudinal end of the tank (11), allows balancing the moments generated by the weight and other forces acting on the tank (11).

Although in the figures shown only one tank (11) is depicted to illustratively show the elements involved in its coupling with respect to the coupling portion (14) according to an embodiment, preferably a second tank will be implemented as part of the aircraft section (10). This second tank may be arranged, for example, in tandem with the first tank (11). That is, the second tank is arranged consecutively behind the first tank along a longitudinal direction of the aircraft section or in a longitudinally consecutive section of the aircraft (10). In turn, said second tank may be coupled to a coupling portion by means of an arrangement of straps under tension similar to the one described in connection with Figure 1a, or by means of a different arrangement according to the present invention.

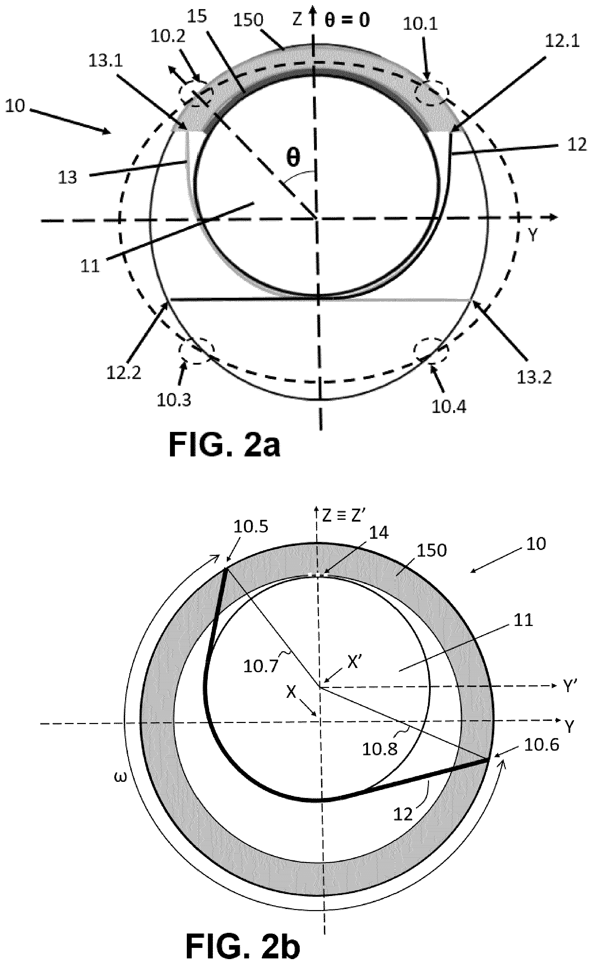

Figure 2a shows the schematic representation of the aircraft section (10) shown in Figure 1, wherein the portions of minimum theoretical displacement of the airframe of the aircraft in case of a vertical impact event have been highlighted.

More particularly, as can be seen, an example of a cross-section of an unpressurized fuselage section (10) of an aircraft is considered. For this unpressurized fuselage section (10) of an aircraft, a vertical impact event would involve a resulting reaction substantially vertical (according to the Z-axis as shown in Figure 2a, corresponding to the yaw axis of the aircraft). This reaction would tend to deform the geometry (substantially cylindrical) of the airframe in the YZ plane as defined by the Y-axis and the Z-axis shown in Figure 2a. More specifically, a dashed line shows an example of an elliptical geometry at which the substantially cylindrical airframe would tend to deform depending on the amplitude of the vertical impact event.

The intersection points (10.1, 10.2, 10.3, 10.4) between the actual geometry of the schematic representation of the airframe at the unpressurized fuselage section (10) and the elliptical geometry depicted with dashed lines correspond to the portions of minimum theoretical displacement (i.e., minimum theoretical deformation). These portions, for the sake of clarity, have been highlighted using ellipses with dashed lines.

In an embodiment, the portions of minimum theoretical displacement of a cylindrical airframe of an aircraft at the fuselage section (10) are located for any cross-section of the aircraft section by a plane perpendicular to the longitudinal direction, at angular positions (θ) of about 40-50 degrees, 130-140 degrees, 220-230 degrees and 310-320 degrees with respect to the projection of the direction of the positive (upward) yaw axis of the aircraft on that plane, wherein the angles are measured in anticlockwise direction from the positive yaw axis of the aircraft (depicted as the vertical Z-axis in figure 2a), which corresponds to θ=0.

Preferably, the straps used to maintain the tank (11) pressed against the coupling portion are anchored at said portions of minimum theoretical displacement. Advantageously, anchoring the first strap (12) and the second strap (13) at positions of minimum theoretical displacement of the airframe implies reducing the transverse loads transmitted to the tank (11) in case of a vertical impact event.

Figure 2b shows a schematic representation of a cross-sectional view of an aircraft section (10) according to an embodiment of the invention. In this embodiment, the tank (11) extends along a longitudinal direction (X'), perpendicular to an Y'Z' plane defined by the Y'-axis and the Z'-axis shown in Figure 2b.

With respect to said axes X'Y'Z', the X'-axis corresponding to the longitudinal axis of the tank (11), and being parallel to the longitudinal direction of the aircraft section (10). On the other hand, the Y'Z' axes have their origin on the X'-axis, the Y'-axis being parallel to the pitch axis (Y) of the aircraft, and the Z'-axis being parallel to the yaw axis (Z) of the aircraft.

A coupling element embodied as a frame (150) is schematically depicted. A coupling portion (14) is also schematically depicted in white dotted line as the portion of the frame (150) against which the tank (11) is maintained pressed.

A first strap (12) is also shown in Figure 2b, whereas a second strap is not shown in the figure, although it is present in the aircraft section (10). The first strap (12) is anchored at anchoring points (10.5, 10.6) of an anchoring structure such that, when the anchoring points are projected on a plane perpendicular to the longitudinal direction (X'), i.e., the Y'Z' plane, a radius (10.7, 10.8) is defined between the longitudinal direction (X') and the projection of each anchoring point (10.5, 10.6).

In an embodiment, the angle (ω) defined between the two radii (10.7, 10.8) on said perpendicular plane Y'Z' is in the range from 180° and 270°, wherein the angle is measured between the anchoring points (10.5, 10.6) in the direction in which the first strap extends. For a given tank (11) and coupling portion (14), the position of the anchoring points determines the shape of the strap. As already disclosed, any strap contact the outer skin of the tank along a portion of its length. Thus, in general, the closer the anchorage points of the respective attachment portions of the same strap are to each other, the greater the portion of contact with the tank body and the tighter the geometry defined by the strap. In this sense, any strap may adopt different shapes depending on the relative arrangement of the anchorage points, such as L-shape, C-shape or U-shape configurations or a completely closed loop if the anchoring points coincide.

In an embodiment, the aircraft section is a section of the fuselage of an aircraft and the longitudinal direction of the aircraft section is the longitudinal direction of the fuselage.

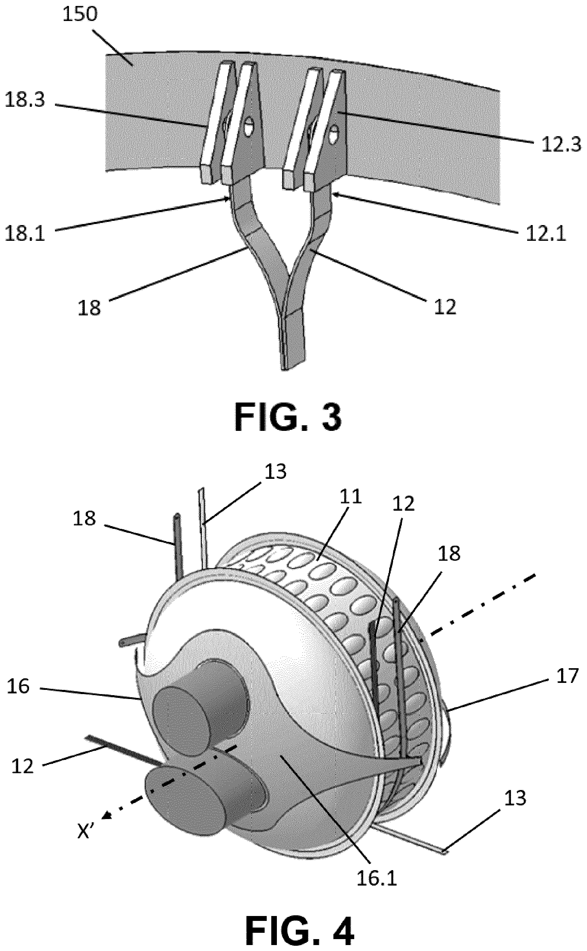

In an embodiment, the aircraft section (10) comprises one or more additional straps (18) comprising two attachment portions (18.1) anchored to at least one part of at least one anchoring structure (150) of the aircraft section (10) through two corresponding anchoring means (18.3), said additional strap (18) being arranged under tension such that the tank (11) is maintained pressed against one or more coupling portions by the first strap (12), the second strap (13) and/or the additional strap (18). Figure 3 shows a schematic representation of a portion of an additional strap (18) anchored to an anchoring structure (150) of an aircraft section (10) by one of its attachment portions (18.1) through an anchoring means (18.3).

Additionally, in the embodiment of Figure 3 it can be observed the presence of the first strap (12) anchored also to the same anchoring structure (150) of the aircraft section (10) to which the additional strap (18) is anchored. Said first strap (12) comprises an attachment portion (12.1) anchored by means of a corresponding anchoring means (12.3) to the anchoring structure (150) of the aircraft section (10).

In this embodiment the first strap (12) and the additional strap (18) are joined to each other by at least a portion of their length and only branch, i.e. separate from each other, in the corresponding portions close to the attachment portions anchored to the anchoring structure (150) of the aircraft section (10).

This configuration ensures a fail-safe mode of attachment provided to the tank (11). In particular, each single strap (12, 18) is designed to withstand the limit loads in case of failure, to guarantee the integrity of the union between the coupling portion (14) and the tank (11) in case of a single failure in one of the first strap (12) or additional strap (18).

In some embodiments, the first strap (12) and the additional strap (18) may be made of a textile material, such as nylon, and be sewn together. The first strap (12) and the additional strap (18) may also be made of a metallic material and be clamped together by means of a frangible joint.

In the example shown in Figure 3, the two anchoring means (12.3, 18.3) of the first strap (12) and of the additional strap (18), respectively, are two fittings separated from each other.

In an alternative embodiment, the anchoring means (12.3, 18.3) may be integrated into a single fail-safe fitting capable of connecting both attachment portions (12.1, 18.1) of the first strap (12) and the additional strap (18).

Figure 4 shows a schematic representation of a strap distribution configuration around a tank (11) in an aircraft section according to an embodiment of the invention. The aircraft section (10) comprises a first strap (12) and a second strap (13), each one arranged forming substantially an L-shape.

Additionally, an additional strap (18) with a U-shaped configuration is arranged substantially in the middle of the central portion of the tank (11), between the first strap (12) and the second strap (13). Said additional strap (18) holds and presses the tank (11), by means of a pre-load provided to the additional strap (18), against a coupling portion disposed over the tank (11), and which is not shown in Figure 4 for improved clarity and identification of the elements.

In the embodiment of Figure 4, the aircraft section (10) further comprises a first retention strap (16) arranged in contact with a first dome-shaped longitudinal end (i.e., the foremost end as seen in Figure 4) of the tank (11) according to the longitudinal direction (X') of the tank (11). The aircraft section (10) comprises a second retention strap (17) arranged in contact with a second dome-shaped longitudinal end (i.e., the rearmost end as seen in Figure 4) of the tank (11) according to the longitudinal direction (X') of the tank (11).

As can be seen, the first retention strap (16) comprises a retention portion (16.1) in contact with the first longitudinal end of the tank (11), said retention portion (16.1) being wider than a portion of the first retention strap (16) which is not in contact with the tank. The first retention strap (16) withstands inertial loads along the longitudinal direction (X') of the tank (11) tending to accelerate the tank (11) forward according to the longitudinal direction (X').

In turn, the second retention strap (17) comprises a retention portion (not shown) in contact with the rear longitudinal end of the tank (11), said retention portion being wider than a portion of the second retention strap (17) which is not in contact with the tank. The second retention strap (17) withstands inertial loads along the longitudinal direction (X') of the tank (11) tending to accelerate the tank (11) backward according to the longitudinal direction (X').

More in particular, the configuration of the retention straps (16, 17), with their retention portions (i.e., "widest" or larger sized portions) in contact with the corresponding dome-shaped longitudinal ends of the tank (11), provides a retention surface which allows supporting and damping the inertial loads of the tank (11) during service. The optimal distribution of these loads provided by the configuration of the retention straps (16, 17) reduces the load concentration at the dome-shaped longitudinal ends of the tank (11). Therefore, the implementation of the retention straps (16, 17) with wide retention portions prevents the need for further reinforcing the structure of the dome-shaped longitudinal ends of the tank (11), since the inertial loads withstood by the tank (11) will be transmitted through the contact surface with the retention straps (16, 17) and further transmitted through the whole retention straps (16, 17), that is, through narrower parts which are not in contact with the tank (11)). More in particular, the loads are transmitted in the form of longitudinal tension through the retention straps (16, 17) to the corresponding attachment portions anchored to at least one part of at least one anchoring structure of the aircraft section (10).

It can be seen that in this embodiment the retention portion (16.1) of the first retention strap (16) comprises two openings configured to allow passage of protruding elements or piping connected to the tank (11).

In the embodiment of Figure 4, the central portion of the tank (11) is provided with protruding reinforcing elements on the outer skin of the tank (11). In this embodiment, the protruding reinforcing elements have an elliptical dome shape. Regarding said reinforcing elements, in different embodiments the tank may comprise bulges with round form or bulges with omega shape provided on the outer skin of the tank (11) during the manufacturing process of the tank (11) or afterwards by means of an adequate machining process. In other examples, the reinforcing elements comprise stingers, pads or doublers. The implementation of said reinforcing elements has the advantage that the pressure acting onto the tank (11) is transformed into tension loads which has the potential of alleviating the buckling behaviour. Additionally, the presence of reinforcing elements protruding outwardly from outer skin of the tank (11) provides a physical barrier that acts as an obstacle to prevent relative slippage or displacement between the first strap (12) or the second strap (13) and the tank (11) as a result of the appearance during service of an inertial load that would tend to displace the tank (11) along a longitudinal direction (X') of the tank (11).

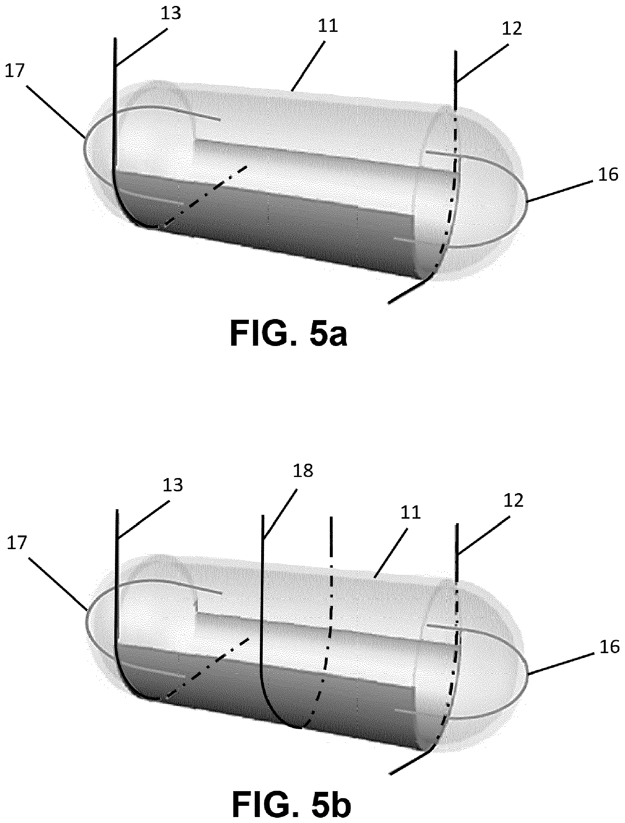

Figures 5a-5c show schematic representations of strap distribution configurations around a tank (11) in aircraft sections according to embodiments of the invention. As can be seen, in these embodiments the tank (11) comprises a central portion with a substantially cylindrical geometry. Additionally, regarding forward and rear (as shown in the figures) longitudinal ends of the tank (11) according to a longitudinal direction of the tank (11), it can be seen that both longitudinal ends have a dome-shaped geometry, more specifically a spherical cap geometry. However, in other embodiments the tanks (11) may have a different shape and/or the longitudinal ends of the tanks (11) may have a different geometry, such as a toroidal geometry.

As can be seen, in Figure 5a there is a first strap (12) and a second strap (13) provided around the tank (11) for coupling said tank to at least one anchoring structure (not shown) of an aircraft section according to an embodiment of the invention. Both the first strap (12) and the second strap (13) are arranged such as to form substantially an L-shape. Additionally, a first retention strap (16) and a second retention strap (17) are provided, respectively, in contact with opposite longitudinal ends of the tank (11).

Figure 5b, as can be seen, differs from Figure 5a in that it also shows an additional strap (18) in the middle of the central portion of the tank (11), this additional strap (18) being arranged so as to form a U-shape.

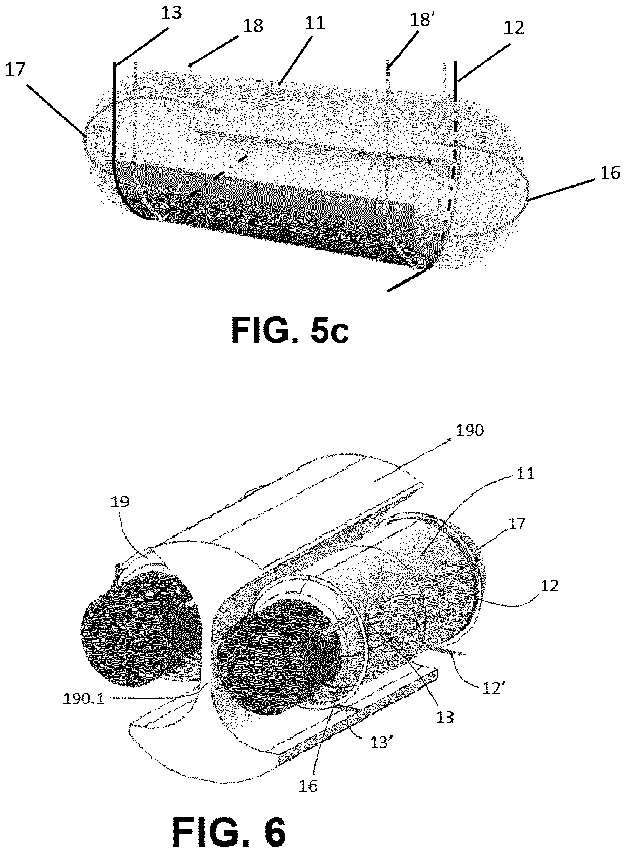

Figure 5c, as can be seen, differs from Figure 5a in that it also shows two additional straps (18, 18') arranged so as to form a U-shape, respectively. Each additional strap (18, 18') is located in a position close to the first strap (12) or the second strap (13).

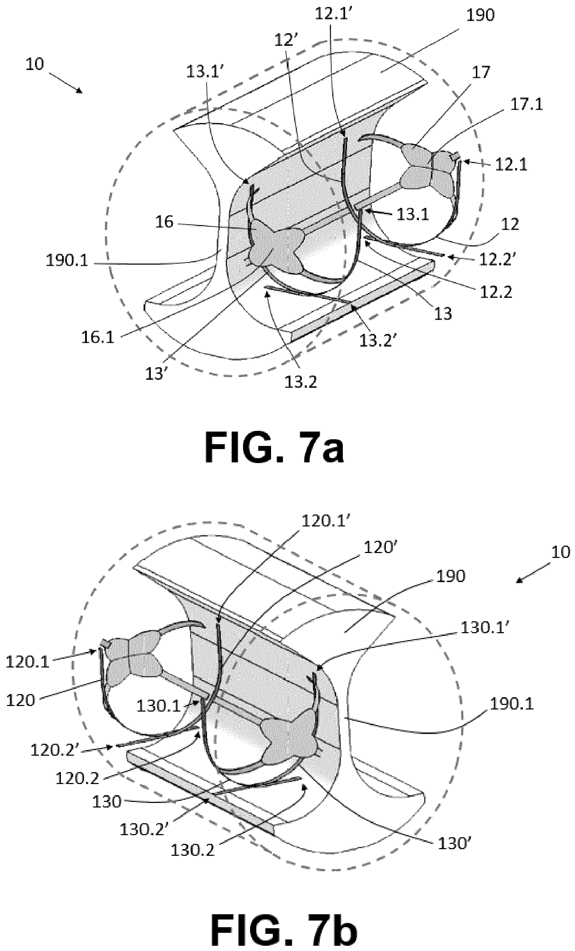

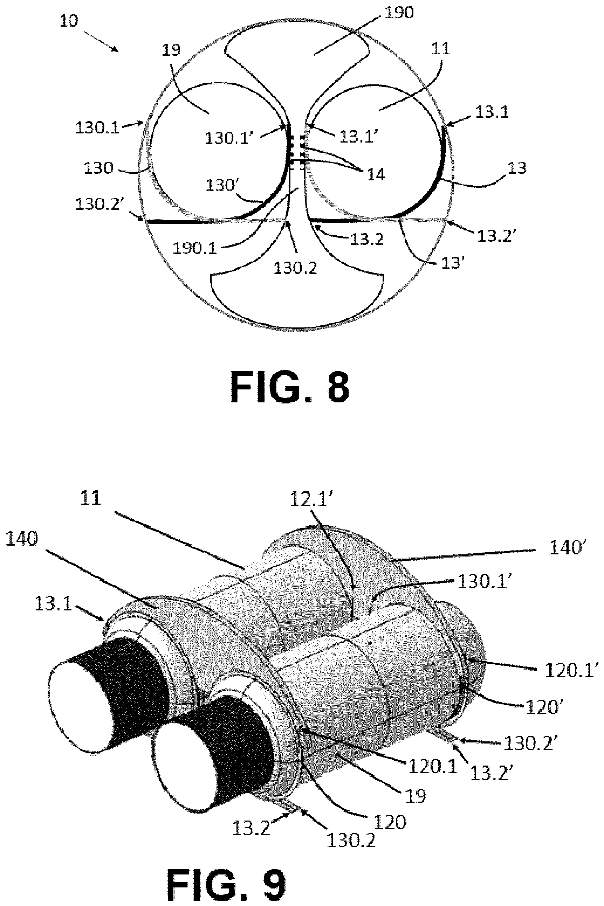

Figures 6 to 8 show a schematic representation of an aircraft section (10) according to an embodiment of the invention. According to this embodiment, the aircraft section comprises, further to the first fuel storage tank (11), a second fuel storage tank (19). In this embodiment, an anchoring structure is a coupling element (190) comprising a wall interposed between the two tanks (11, 19). For improved clarity and identification of the elements, in Figures 7a-7b only some elements of the aircraft section (10) are shown. Figure 8 shows a schematic representation in cross section.

For the attachment of the first tank (11) to a first coupling portion (which in this embodiment is a portion of the coupling element (190)), the aircraft section (10) comprises a first strap (12) and a second strap (13), wherein the first strap (12) comprises two attachment portions (12.1, 12.2) anchored to different parts of the aircraft section (10) through two corresponding anchoring means (not shown) and the second strap (13) comprises two attachment portions (13.1, 13.2) anchored to different parts of the aircraft section (10) through two corresponding anchoring means (not shown). Both the first strap (12) and the second strap (13) are arranged under tension by a preload applied during the assembly process for maintaining the tank (11) pressed against the first coupling portion.

Similarly, for the attachment of the second tank (19) to a second coupling portion (14), the aircraft section (10) comprises a third strap (120) and a fourth strap (130), wherein the third strap (120) comprises two attachment portions (120.1, 120.2) anchored to different parts of the aircraft section (10) through two corresponding anchoring means (not shown) and the fourth strap (130) comprises two attachment portions (130.1, 130.2) anchored to different parts of the aircraft section (10) through two corresponding anchoring means (not shown). Both the third strap (120) and the fourth strap (130) are arranged under tension by a preload applied during the assembly process for maintaining the tank (19) pressed against the second coupling portion.

The first tank (11) is maintained pressed against the first coupling portion (14) by the first strap (12) and the second strap (13), both of which press the tank (11), through their respective contact portions, against the first coupling portion (14) of the aircraft section (10), that is, against a portion of the coupling element (190). This is visible in figures 6 and 8.

The second tank (19) is maintained pressed against the second coupling portion (14) by the third strap (120) and the fourth strap (130), both of which press the second tank (19), through their respective contact portions, against the second coupling portion (14) of the aircraft section (10), that is, against a portion of the coupling element (190). This is visible in figures 6 and 8.

As mentioned, in this embodiment the coupling portions (14) are two portions of the coupling element (190). As shown in figures 6 to 8, the coupling element (190) comprises a wall (190.1) interposed between both tanks (11, 19), such that the first tank (11) and the second tank (19) are maintained pressed against opposite sides of the wall (190.1). Said sides of the wall (190.1) define in this embodiment two coupling portions (14) of the aircraft section (10), each coupling portion (14) corresponding to a different tank (11, 19). In figure 8 the coupling portions (14) are schematically depicted in dot line. In a preferred embodiment, a damping layer (not shown) is arranged between the coupling portion (14) and each tank (11, 19).

In the embodiment shown, one attachment portion (12.2) of the first strap (12) and one attachment portion (13.2) of the second strap (13) are anchored to the coupling element (190). Also, one attachment portion (120.2) of the third strap (120) and one attachment portion (130.2) of the fourth strap (130) are anchored to the coupling element (190). The other attachment portion of the first (12), second (13), third (120) and fourth (130) straps are anchored to other anchoring structures of the aircraft section (10), such as one or more portions of one or more frames of the aircraft section (10). The first strap (12), the second strap (13), the third strap (120) and the fourth strap (130) are arranged such as to form each one substantially an L-shape.

Although in some embodiments the aircraft section (10) comprises only a first (12) and a second (13) strap, in the embodiment of figures 6 to 8 the aircraft section comprises additional straps (12', 13') for the attachment of the first tank (11) and additional straps (120', 130') for the attachment of the second tank (19). The additional straps (12', 13', 120' 130') comprise respective attachment portions (12.1', 12.2', 13.1', 13.2', 120.1', 120.2', 130.1', 130.2') anchored to anchoring structures of the aircraft section (10) and schematically shown in figures 7a-7b. The additional straps (12', 13', 120', 130') are arranged such as to form each one substantially an L-shape.

The aircraft section (10) of figures 6 to 8 further comprises a first retention strap (16) arranged with its retention portion (16.1) (i.e. the portion having the greatest width) in contact with a first longitudinal end (i.e. "forward longitudinal end" as shown in the figures) of the first tank (11) according to the longitudinal direction of the tank (11). In an embodiment, both the first strap (12) and the second strap (13) wrap around a portion of the tank (11) skin, each of them having a very high aspect ratio (the length being up to two orders of magnitude greater than the width), defining corresponding substantially parallel planes. Each of said parallel planes are transverse to the longitudinal direction of the tank (11). As visible, in this embodiment the first retention strap (16) is substantially X-shaped, and curved so as to adapt to the dome-shaped geometry of the forward longitudinal end of the tank (11). In particular, the first retention strap (16) comprises four branches extending from the retention portion (16.1) of the first retention strap (16). As can be seen, two of said branches are anchored to the coupling element (190), whereas the other two branches are anchored to other parts of at least one anchoring structure of the aircraft section (not shown), such as a frame.

Additionally, as can be seen, in this embodiment respective piping are connected to both tanks (11, 19) through each corresponding foremost (as seen in figure 6) dome-shaped longitudinal end. In particular, said piping is depicted as two dark cylindrical protruding elements extending from each of said dome-shaped longitudinal ends.

In the embodiment of figures 6 to 8, the aircraft section further comprises a second X-shaped retention strap (17) arranged with its retention portion (17.1) in contact with a second dome-shaped longitudinal end (i.e., "rear longitudinal end" as shown in the figures) of the tank (11) according to the longitudinal direction of the tank (11) and opposite the first retention strap (16). The second retention strap (17) also comprises four branches extending from the retention portion (17.1) of the second retention strap (17). As can be seen, two of said branches of the second retention strap (17) are anchored to the coupling element (190), whereas the other two branches are anchored to other parts of at least one anchoring structure of the aircraft section (not shown), such as a frame.

Advantageously, in the embodiment of figures 6 to 8, comprising a first retention strap (16) and a second retention strap (17) arranged with their respective retention portions (16.1, 17.1) in contact with opposite dome-shaped longitudinal ends of a tank (11) according to the longitudinal direction of the tank (11), provides the tank (11) with a coupling configured to offer resistance to inertial loads derived from the aircraft operation and assembly process, in any direction.

Figures 9 to 10 show a schematic representation, in perspective view and cross-section, respectively, of an aircraft section (10) according to another embodiment of the invention. The aircraft section comprises a first tank (11), a second tank (19) and a plurality of anchoring structures. In this embodiment, two anchoring structures are embodied each as a coupling element (140, 140').

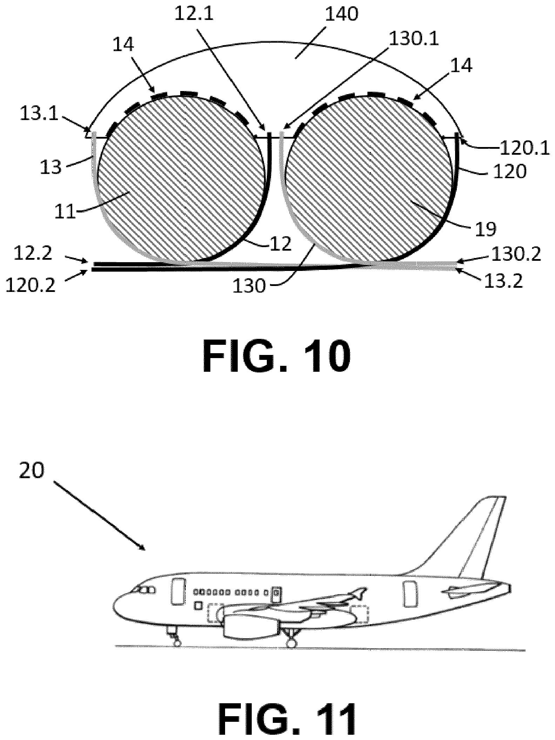

The description provided for the first (12), second (13), third (120) and fourth (130) strap in connection with figures 6 to 8 is applicable to the embodiment of figures 9 to 10. However, the coupling elements (140, 140') of the embodiment shown in figures 9 to 10 are frames having a yoke shape. More specifically, the coupling elements (140, 140') comprise two portions for receiving an upper portion of the tanks (11, 19). Said portions of the coupling elements (140, 140') define coupling portions (14) in this embodiment, which are schematically depicted in discontinuous line in figure 10.

The first tank (11) is maintained pressed against a coupling portion (14) by the first strap (12) and the second strap (13), both of which press the tank (11), through their respective contact portions, against the coupling portion, that is, against the corresponding portion of a coupling element (140).

Likewise, the second tank (19) is maintained by the third strap (120) and the fourth strap (130) pressed against a coupling portion, that is, against the corresponding portion of a coupling element (140).

In a preferred embodiment, a damping layer (not shown) is arranged between the coupling portion and each tank (11, 19).

The embodiment of figures 9 to 10 comprise four additional straps (12', 13', 120', 130') for attaching and maintaining the tanks (11, 19) pressed against the additional coupling element (140'). In figure 10, the first (12), second (13), third (120) and fourth (130) straps are visible, whereas the additional straps (12', 13', 120', 130') are behind, and hidden by, the visible straps.

In the embodiment shown, one attachment portion (12.1) of the first strap (12) and one attachment portion (13.1) of the second strap (13) are anchored to the coupling element (140). Also, one attachment portion (120.1) of the third strap (120) and one attachment portion (130.1) of the fourth strap (130) are anchored to the coupling element (140). The other attachment portions of the first (12), second (13), third (120) and fourth (130) straps are anchored to other parts of one or more anchoring structures of the aircraft section (10), such as one or more portions of one or more frames. Similarly, one attachment portion of the additional straps is anchored to the additional coupling element (140') and the other attachment portions of the additional straps are anchored to other parts of one or more anchoring structures of the aircraft section (10).

In the embodiments shown in figures 6 to 10 the tanks (11, 19) have a central portion with a substantially cylindrical geometry. However, the tanks may have a different shape, such as a central portion with a substantially elliptical or frustoconical geometry. Additionally, regarding the first and second longitudinal end of the tanks (11, 19), that is, the forward longitudinal end and read longitudinal end, according to the longitudinal direction of the tanks (11, 19), in the embodiments shown they have a dome-shaped geometry, but in other embodiments the longitudinal ends of the tanks may have a different shape.

Figure 11 shows an embodiment of an aircraft (20) comprising a section of fuselage (100) according to an embodiment of the invention.

## Claims

1. -An aircraft section (10) comprising a fuel storage tank (11), a first strap (12), a second strap (13), at least one anchoring structure (140, 150, 190) and at least one coupling portion (14); wherein:
the first strap (12) comprises two attachment portions (12.1, 12.2) anchored to the at least one anchoring structure (140, 150, 190);
the second strap (13) comprises two attachment portions (13.1, 13.2) anchored to the at least one anchoring structure (140, 150, 190); and
the first strap (12) and the second strap (13) are arranged under tension such that the tank (11) is maintained pressed against the at least one coupling portion (14) by the first strap (12) and the second strap (13).

2. - The aircraft section (10) according to the previous claim, wherein the tank (11) is arranged resting on a portion of the first strap (12) and on a portion of the second strap (13).

3. - The aircraft section (10) according to any of the previous claims, wherein a damping layer (15) is provided between the at least one coupling portion (14) and the tank (11), wherein the damping layer (15) is preferably made of an elastomeric material.

4. - The aircraft section (10) according to any of the previous claims, further comprising a first retention strap (16), wherein the first retention strap (16) comprises a retention portion (16.1) in contact with the tank (11), said retention portion (16.1) being wider than a portion of the first retention strap (16) which is not in contact with the tank (11).

5. - The aircraft section (10) according to the previous claim, wherein the tank (11) extends along a longitudinal direction, the tank having a first longitudinal end and a second longitudinal end according to the longitudinal direction;
wherein the first strap (12) and the second strap (13) are arranged transversely with respect to the longitudinal direction of the tank (11);
wherein the retention portion (16.1) of the first retention strap (16) is in contact with the first longitudinal end of the tank (11); and
wherein the first retention strap (16) comprises at least two attachment portions anchored to the at least one anchoring structure.

6. - The aircraft section (10) according to the previous claim, further comprising a second retention strap (17), wherein the second retention strap (17) comprises a retention portion (17.1) in contact with the tank (11), said retention portion (17.1) being wider than a portion of the second retention strap (17) which is not in contact with the tank (11);
wherein the retention portion (17.1) of the second retention strap (17) is in contact with the second longitudinal end of the tank (11); and
wherein the second retention strap (17) comprises at least two attachment portions anchored to the at least one anchoring structure.

7. - The aircraft section (10) according to any of the previous claims, further comprising at least one additional strap (18) comprising two attachment portions (18.1) anchored to the at least one anchoring structure, said at least one additional strap (18) being arranged under tension such that the tank (11) is maintained pressed against the at least one coupling portion by the first strap (12), the second strap (13) and/or the additional strap (18).

8. - The aircraft section (10) according to any of the previous claims, wherein at least one attachment portion (12.1, 12.2) of the first strap (12), at least one attachment portion (13.1, 14.2) of the second strap (13) and/or at least one attachment portion (18.1) of an additional strap (18) is bifurcated into two attachment subportions, each attachment subportion being connected to a different part of the at least one anchoring structure.

9. - The aircraft section (10) according to any of the previous claims, wherein the first strap (12), the second strap (13) and/or an additional strap (18) comprises two braided strands, wherein each braided strand is connected to a different part of the at least one anchoring structure.

10. - The aircraft section (10) according to any of the previous claims, further comprising a second fuel storage tank (19), a third strap (120) and a fourth strap (130); wherein:
the third strap (120) comprises two attachment portions (120.1, 120.2) anchored to the at least one anchoring structure;
the fourth strap (130) comprises two attachment portions (130.1, 130.2) anchored to the at least one anchoring structure;
the third strap (120) and the fourth strap (130) are arranged under tension such that the second tank (19) is maintained pressed against at least one coupling portion (14) by the third strap (120) and the fourth strap (130);
at least one anchoring structure is a coupling element (140, 190);
at least one coupling portion (14) is a portion of the coupling element (140, 190);
at least one attachment portion (12.1, 12.2) of the first strap (12) and at least one attachment portion (13.1, 13.2) of the second strap (13) are anchored to the coupling element (140, 190); and
at least one attachment portion (120.1, 12.2) of the third strap (120) and at least one attachment portion (130.1, 130.2) of the fourth strap (130) are anchored to the coupling element (140, 190).

11. - The aircraft section (10) according to the previous claim, wherein the coupling element (190) comprises a wall (190.1) interposed between both tanks (11, 19), such that the first tank (11) and the second tank (19) are maintained pressed against opposite sides of the wall (190.1).

12. - The aircraft section (10) according to any of the previous claims, wherein the aircraft section (10) is a fuselage section, and wherein the at least one coupling portion (14) is a portion of at least one frame of the fuselage section.

13. - The aircraft section (10) according to the previous claim, wherein the at least one coupling portion (14) is an upper portion of the frame and wherein a clearance is provided between the tank (11) and a lower portion of the frame.

14. - The aircraft section (10) according to any of the previous claims 12-13, wherein at least one attachment portion (12.1, 12.2) of the first strap (12) and/or at least one attachment portion (13.1, 13.2) of the second strap (13) is anchored at a portion of minimum theoretical displacement of the frame when the aircraft section (10) is submitted to vertical impact.

15. - An aircraft (20) comprising an aircraft section (10) according to any of the previous claims.
